# EUROPEAN PATENT APPLICATION

(11) **EP 1 164 734 A1**
(43) Date of publication of application: **19.12.2001**
(21) Application number: 01900695.6
(22) Date of filing: 12.01.2001
(51) Int. Cl.: H04J 13/04, H04B 7/26

(54) **RADIO BASE STATION DEVICE AND RADIO COMMUNICATION METHOD**

(30) Priority: 24.01.2000 JP 2000014589
(71) Applicant: MATSUSHITA ELECTRIC INDUSTRIAL CO., LTD., Kadoma-shi, Osaka 571-8501 (JP)
(72) Inventor: MIYA, Kazuyuki, Kawasaki-shi, Kanagawa 215-0021 (JP); MIYOSHI, Kenichi, Yokohama-shi, Kanagawa 232-0066 (JP); UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP0100120
(87) International publication number: WO0156209

(57) **Abstract**

The replica signals generated in a replica generation circuit 306 are sent to a combining circuit 203 through a bus 204. In the combining circuit 203, the above replica signals are input from each circuit board X through Z for combining of replica signals. In a channel allocation control circuit 202, a new channel is allocated so that the relations between the order and likelihood are almost uniform among subsets, based on likelihood information reported from each circuit board X through Z which is a subset; accommodated symbol rates and services (voice signals and packet signals); target SIRs and so on. Thereafter, the allocation control signals are sent to each circuit board X through Z.

## Description

### Technical Field

The present invention is relates to a piece of radio station apparatus and radio communication method used in a digital radio communication system.

### Background Art

There are a single user type (SUD: Single User Detection) and a multi user (MUD: Multi User Detection) as an interference canceller in a CDMA (Code Division Multiple Access) system. The single user type is a method for interference cancellation using only a spreading code and receiving timing of a local station, and a typical example of the above type is an orthogonal filter for adaptive control of a tap coefficient of a matched filter so that the above coefficient has orthogonality to a spreading code of an interference signal. SUD has a simpler configuration than that of MUD, and easier implementability, but it is difficult to apply SUD when there is discordance between symbol duration and that of the spreading code under a multi-path environment.

On the other hand, MUD is a method for interference cancellation in which data decision is performed after amplitude and phase estimation of received signals of all users is performed based on spreading codes and receiving timing information of all users under communication, and has no restriction on the spreading codes. As MUD, there have been a multi-stage type interference canceller in which receiving characteristics are improved through two-or-more-time repetition (multi-stage) of processing where interference replica signals of other users are generated at a receiving side, based on channel estimation values and decision data, and the above replica signals are subtracted from received signals to cause improved SIR (Signal to Interference Ratio); and a single-stage type interference canceller in which likelihoods of all the symbols of all channels are subjected to ranking processing, replica signals are generated at the receiving side in decreasing order of the likelihood, and the above replica signals are subtracted from received signals to increase SIR and hence improve receiving characteristics.

As a single-stage type interference canceller, there is a symbol-ranking-type interference canceller (SRIC) which has been proposed in "Study on a CDMA interference canceller for an uplink" by UESUGI, KATO, and HOMMA, IEICE (The Institute of Electronics, Information, and Communication Engineers) Technical Report RCS96-121.

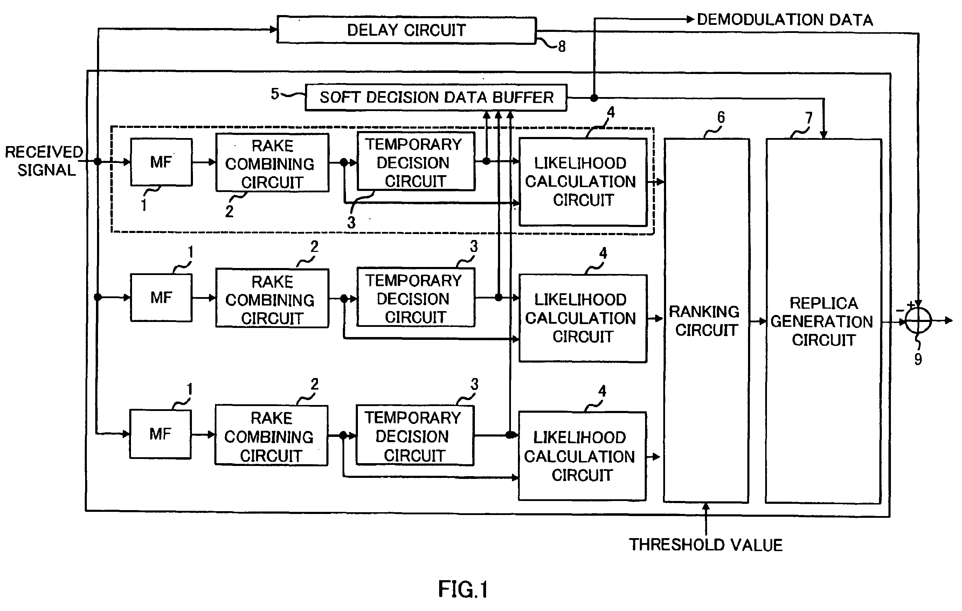

Operations of the above symbol-ranking-type interference canceller will be described, referring to FIG. 1. In the first place, despreading processing of all the symbols of received signals for each user is performed with a matched filter (MF) 1, using a spreading code (a spreading code used for spreading modulation processing at the side of a communication terminal), and RAKE combining of the obtained despreading signals is performed in a RAKE combining circuit 2. Then, temporary decision of each symbol after the above RAKE combining is performed in a temporary decision circuit 3. The each symbol after temporary decision is stored in a soft decision data buffer 5. In the above soft decision data buffer 5, buffering is performed by a time width for ranking with regard to the likelihood (window width: a range of symbols for ranking).

Each symbol after the temporary decision is sent to a likelihood calculation circuit 4 for likelihood calculation. All symbols after the above likelihood calculation are sent to a ranking circuit 6, where ranking is performed in decreasing order of the likelihood according to the calculated likelihood. In a replica generation circuit 7, a replica signal is generated from a symbol with the greatest likelihood among all the symbols and the above replica signal is output to an adder 9, where the difference between the received signal delayed in a delay circuit 8 and the above replica signal is obtained. That is, the replica signal for the symbol with the greatest likelihood is canceled from the received signal.

RAKE combining of the received signal, from which the replica signal is canceled as described above, is performed again in the RAKE combining circuit 2; the likelihood for the above received signal is calculated; ranking of the above signal is performed according to the above likelihood; another replica signal for the symbol with the greatest likelihood is generated; and the current replica signal is canceled from the signal from which the previous replica signal is canceled. The above processing is repeated for all the symbols of all users.

Thus, replica signals may be accurately generated even without the multi-stage configuration in the symbol-ranking-type, as ranking of likelihoods is performed for each symbol without generation of replica signals for each user. Therefore, the symbol-ranking-type is characterized in that the despreading operation is performed only one time for all symbols. Here, a slot is generally assumed to be used as a window width

However, an enormous amount of delay in processing is caused in the above symbol-ranking-type, as cancellation of replica signals and another-ranking are repeated every one symbol. Therefore, it has been desired that the above ranking processing is simplified in the symbol-ranking-type interference canceller.

### Disclosure of Invention

The object of the present invention is to provide a piece of radio base station apparatus, which is provided with an interference canceller for simpler ranking processing; processing with less delay, and accurate generation of replica signals with smaller amount of operations; and a radio communication method.

The subject of the present invention is to simplify a ranking circuit in a single-stage-multiuser type interference canceller for improvement in the receiving characteristics of a piece of radio base station apparatus in a DS-CDMA system by simultaneous execution of ranking processing or class decision processing by a plurality of subsets.

### Brief Description of Drawings

FIG. 1 is a block diagram showing a configuration of a symbol-ranking type interference canceller;
FIG. 2 is a block diagram showing a schematic configuration of a piece of radio base station apparatus according to the present invention;
FIG. 3 is a block diagram showing an internal configuration of an interference canceller in a piece of radio base station apparatus according to a first embodiment of the present invention;
FIG. 4 is a block diagram showing a part of the interference canceller in the radio base station apparatus according to the above first embodiment;
FIG. 5 is a block diagram showing an internal configuration of an interference canceller in a piece of radio base station apparatus according to a second embodiment of the present invention;
FIG. 6 is a block diagram showing a part of the interference canceller in the radio base station apparatus according to the above second embodiment; and
FIG. 7 is a view for description of an internal configuration of an interference canceller.

### Best Mode for Carrying Out the Invention

Hereinafter, embodiments of the present invention will be described, referring to attached drawings.

### (First embodiment)

In the present embodiment, a symbol-ranking type interference canceller, which is one of single-stage-multiuser type interference canceller, will be described. Especially, there will be described a case where a plurality of subsets for symbol-ranking for a plurality of channels are provided; each subset, independently from each other, performs symbol-ranking; replica signals are generated for each subset; and the above replica signals are combined for cancellation from received signals.

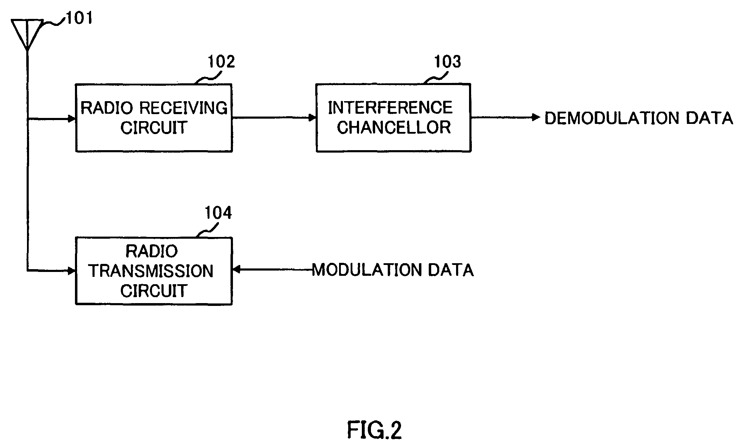

FIG. 2 is a block diagram showing a schematic configuration of a piece of radio base station apparatus according to the present invention. In the above radio base station apparatus, signals transmitted from a piece of communication terminal apparatus are received through an antenna 101, and predetermined radio receiving processing (for example, down conversion and A/D conversion) of the above received signals in a radio receiving circuit 102. Then, the above signals after radio receiving processing are sent to an interference canceller 103, in which interference canceling processing of the above signals is performed to obtain demodulation data. And, in the above radio base station apparatus, predetermined radio transmitting processing (D/A conversion and up conversion, and so on) of modulation data after digital modulation of transmitting data. The signals after the above radio transmitting processing are transmitted to the communication terminal apparatus through the antenna 101.

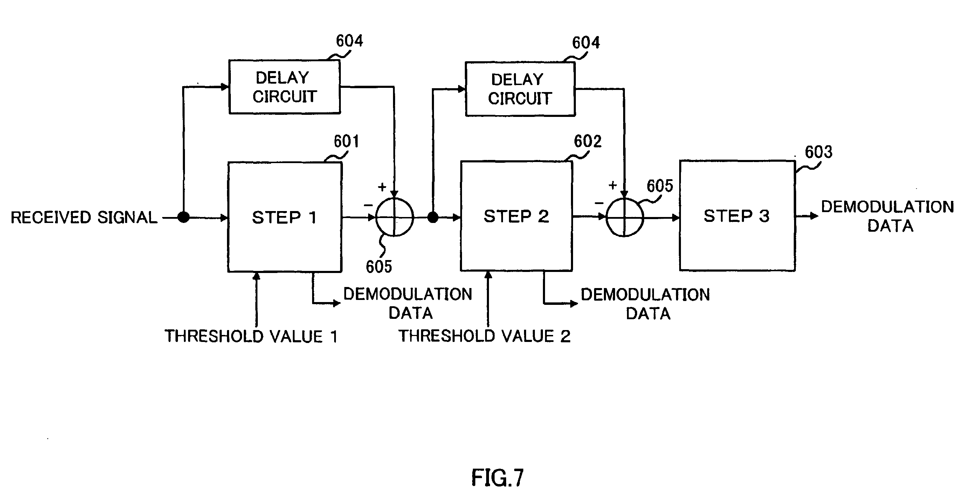

FIG. 7 is a block diagram showing a configuration of the interference canceller. The interference canceller in the radio base station apparatus according to the present embodiment has a configuration in which the above canceller comprises a plurality of steps (processing units), and replica signals for a plurality of symbols are generated at each step, and the above replica signals are canceled from input signals at the same time. Here, a configuration, in which there are three steps, and subtracting processing (canceling processing), two-time ranking, and only-one-time another-ranking are performed, will be described as one example. But, there are no special limitations on the number of steps.

In the above configuration, a first ranking processing and processing for generation of replica signals are performed, and then the replica signals are output to an adder 605 at a step 1 (STEP 1) 601. In the adder 605, the above replica signals are subtracted from the received signals delayed in a delay circuit 604. That is, the replica signals for symbols after ranking at STEP 1 are canceled from the received signals. The signals after cancellation of the above replica signals are sent to STEP 2.

At STEP 1, symbols for generation of replica signals from the ranking results are selected based on threshold decision using a threshold value 1. And, at STEP 1, replica signals are generated, and, at the same time, output as demodulation data in the case of upper symbols above the threshold value among symbols after ranking based on the likelihood.

Then, a second ranking processing (another-ranking processing) and replica-signal generating processing are performed, and replica signals are output to an adder 605 at STEP 2 602. In the adder 605, the above replica signals are subtracted from the received signals delayed in the delay circuit 604. That is, the replica signals for symbols after the another-ranking at STEP 2 are canceled from the received signals. The signals after cancellation of the above replica signals are sent to STEP 3.

At STEP 2, symbols for generation of replica signals from the another-ranking results are selected based on threshold decision using a threshold value 2. And, replica signals are generated for upper symbols above the above threshold value 2 among symbols after ranking based on the likelihood, and, at the same time, output as demodulation data, at STEP 2.

Then, demodulation processing of the remaining symbols (the remaining symbols after cancellation of symbols with greater likelihoods) is performed at STEP 3 603 to output demodulation data.

Though, there are no special limitations on the number of symbols which are processed at each step, it may be configured that the number of symbols are uniformly allotted to each step for uniform processing.

For example, when it is assumed that the number of all symbols for all users is 300, likelihood calculation of all the above symbols is performed at STEP 1; threshold decision of the obtained likelihoods is performed, using the threshold value 1; ranking is performed in decreasing order of the likelihood; and replica signals are generated for upper 100 symbols with regard to the likelihood. The replica signals for the above 100 symbols are canceled from the received signals (300 symbols). In such a case, demodulation data are output for the above 100 symbols.

Then, likelihood calculation of the remaining symbols (200 symbols) after cancellation of replica signals generated at STEP 1 is performed at STEP 2; threshold decision of the obtained likelihood is performed, using the threshold value 2; another-ranking is performed in decreasing order of the likelihood; and replica signals are generated for upper 100 symbols with regard to the likelihood. The replica signals for the above 100 symbols are canceled from the received signals (200 symbols). In such a case, demodulation data are output for the above 100 symbols. Finally, demodulation data are output, at STEP 3, for the remaining symbols (100 symbols) after cancellation of the replica signals generated at STEP 2.

Thus, the despreading processing is performed one time in the present interference canceller, as modulation data are output at each step for all symbols of all users in decreasing order of the likelihood. The above point is the difference between the present canceller and the multi-stage type interference canceller by which the despreading processing is performed at each step. And, times of another-ranking may be decreased and delay in processing may be reduced, as replica signals are generated together at each step, and the above replica signals are canceled from the received signals at the same time.

Then, an internal configuration of each step in the interference canceller will be described.

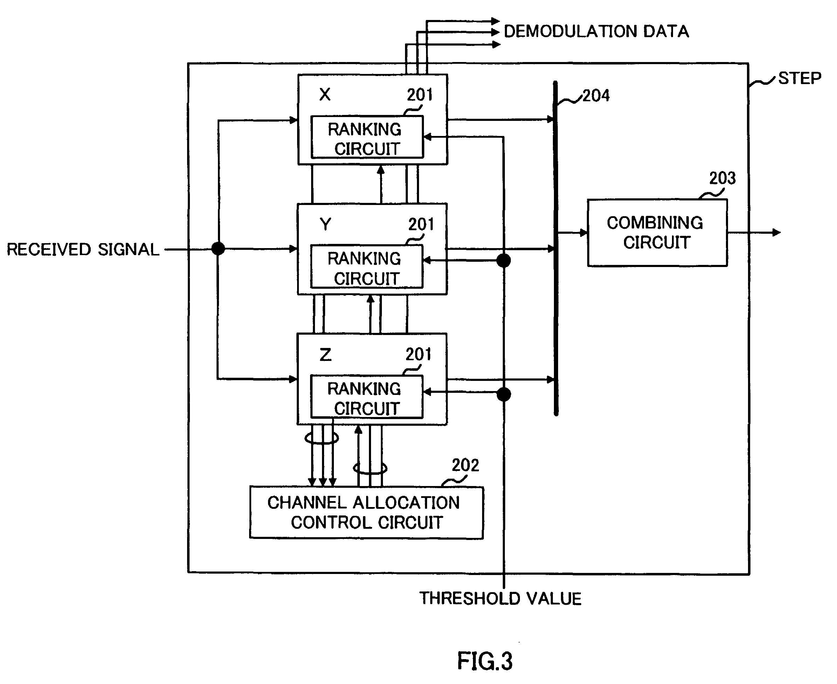

FIG. 3 is a block diagram showing an internal configuration of the interference canceller in the radio base station apparatus according to the first embodiment of the present invention. The step comprises: a plurality of circuit boards X through Z (three boards, here) which are subsets for processing of signals for a plurality of channels; a bus 204 for transmission of replica signals output from the above circuit boards X through Z; and a combining circuit 203 for synthesis of the above replica signals. A ranking circuit 201 is provided in each circuit board X through Z.

Therefore, each subset, independently from each other, may perform processing in subsets, that is, each processing such as despreading, RAKE combining, temporary decision, likelihood calculation, ranking, and replica generation by allocating all channels to a plurality of subsets. Accordingly, the delay in processing may be reduced, and, at the same time, the hardware size may be made smaller.

Here, it is assumed that there are caused great differences in the likelihoods (reliability) of replica signals generated in each subset, satisfying a specified threshold (order), when the relations between the ranking order and the likelihood in the ranking circuits 201 are not uniform among the subsets (circuit boards X through Z). When replica signals which are greatly different from each other in the reliability as described above are combined and canceled from the received signals, there is caused a case where symbols, which are in upper ranking in one subset with regard to the likelihood but not in upper ranking among subsets, are canceled. That is, when there is caused extremely great difference among subsets, replica signals which are generated in one subset and have an extremely low likelihood are subtracted in an early step.

It is assumed in such a case that it is better not to perform the interference cancellation, as advantages of the symbol-ranking, in which more advantages of the interference cancellation are originally realized by generation and cancellation of replica signals in decreasing order of the likelihood, are decreased.

Accordingly, considering the above case, there is provided a channel-allocation control circuit 202 in which channel-allocation to each subset is controlled so that approximately uniform distribution of the symbol likelihood is achieved among,the subsets. Thereby, reduction in the advantages of the interference cancellation by simultaneous ranking processing may be prevented.

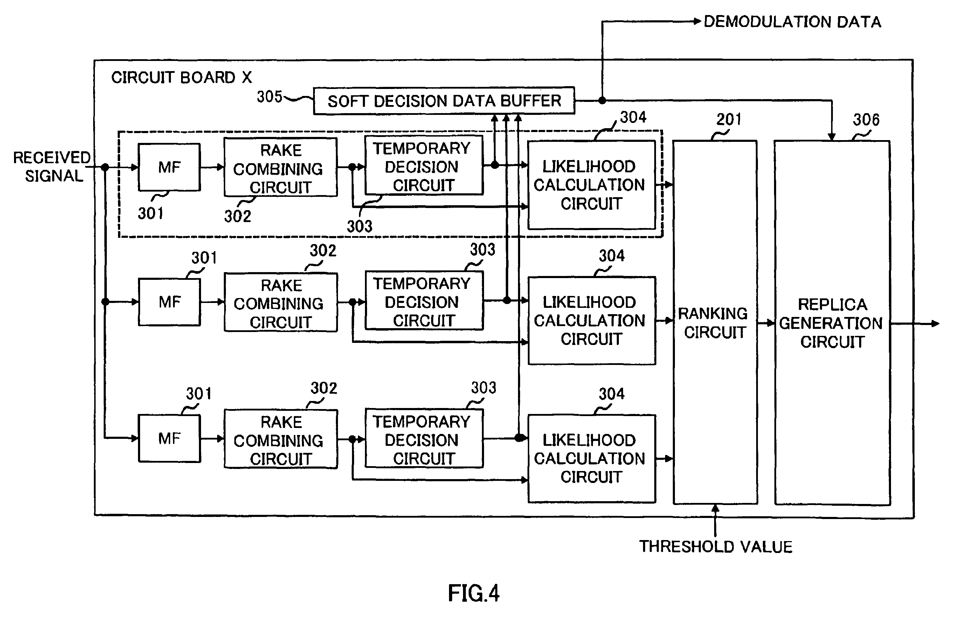

FIG. 4 is a block diagram showing a part of the interference canceller in the radio base station apparatus according to the first embodiment, and shows an internal configuration of each subset (circuit board) . Though FIG. 4 shows a circuit board X, circuit boards Y and Z have the same configuration as that of the above board X.

The circuit board X comprises for each channel (a part enclosed with a dotted line in FIG. 4): a matched filter 301 for despreading processing, using a predetermined spreading code (a spreading code used in spreading modulation processing at the side of the communication terminal apparatus) of received signals; a RAKE combining circuit 302 for RAKE combining using despreading signals obtained by the above despreading processing; a temporary decision circuit 303 for symbol decision of signals after the above RAKE combining; and a likelihood calculation circuit 304 for calculation of likelihoods for symbols. And, the circuit board X comprises: a soft decision data buffer 305 for storage of symbols after temporary decision for each channel; a ranking circuit 201 for ranking processing, based on threshold decision, of symbols after likelihood calculation for each channel; and a replica generation circuit 306 for generation of replicas in decreasing order of the likelihood with regard to symbols after ranking. Operations of the radio base station apparatus provided with the interference canceller having the above configuration will be described. Though the above operations will be described using those of the circuit board X, the circuit boards Y and Z perform similar operations.

As shown in FIG. 4, the received signals are input to the matched filter 301 for despreading processing using a spreading code. Thereby, despreading signals are obtained for each channel. The above despreading signals are output to the temporary decision circuit 303 after RAKE combining in the RAKE combining circuit 302. Then, the data after temporary decision (soft decision) in the temporary decision circuit 303 are stored in the soft decision data buffer 305, and, at the same time, output to the likelihood calculation circuit 304, where likelihood calculation is performed for each symbol. Here, any parameter indicating the received quality may be used as a parameter for the likelihood without any special limitation.

Each channel, independently from each other, performs despreading processing, RAKE combining processing, temporary decision, and likelihood calculation, which have been described above.

All the symbols after the likelihood calculation for each channel are input to the ranking circuit 201, where threshold decision of the likelihoods, and, then, ranking of symbols in decreasing order of the likelihood are performed. In the replica generation circuit 306, replica signals are generated only for predetermined number of symbols, among all symbols after ranking, in decreasing order of the likelihood from the symbol with the greatest likelihood. The symbols for which the replica signals are generated are output as demodulation data from the soft decision data buffer 305.

The replica signals generated in the replica generation circuit 306 are sent to the combining circuit 203 through the bus 204, as shown in FIG. 3. In the combining circuit 203, replica signals are input from each circuit board X through Z, and the above replica signals are combined. The replica signals combined in the combining circuit 203 are replica signals output from STEP 1 shown in FIG. 7, and the above replica signals are canceled from the received signals delayed in the delay circuit 604.

In such a case, a new channel is allocated in the channel allocation control circuit 202 shown in FIG. 3 so that the relations between the order and likelihood are almost uniform among subsets, based on likelihood information reported from each circuit board X through Z which is a subset; accommodated symbol rates and services (voice signals and packet signals); target SIRS and so on. Thereafter, the allocation control signals are sent to each circuit board X through Z. In each circuit board X through Z, despreading processing is performed, using a spreading code corresponding to a channel allocated to the own circuit board, according to the above allocation control signals.

Here, channel allocation control to each subset is basically performed when a new channel is allocated at starting of telephone calls, as switching of channel allocation during telephone calls is complicated control.

Then, the processing at STEP 1 is terminated. Thereafter, processing for the subsequent STEPs is performed in a similar manner as described above, and, then, interference cancellation processing of the received signals is performed.

Thus, despreading processing is performed one time in the radio base station apparatus according to the present embodiment, as the demodulation data for all symbols of all users are output, in decreasing order of the likelihood, at each step in the interference canceller. And, times of another-ranking may be decreased and delay in processing may be reduced, as replica signals are generated together at each step, and the above replica signals are canceled from the received signals at the same time.

Moreover, the ranking circuit may be easily realized, and the size of the hardware may be reduced in the radio base station apparatus according to the present embodiment, as each subset, independently from each other, performs ranking processing in the inter ference canceller. Further, processing till the generation of replica signals may be promptly performed, as each subset, independently from each other, performs ranking processing.

Moreover, a symbol-ranking type interference canceller ( single-stage multi user), other than the above one, has been disclosed in Japanese published application No. Hei -10 (1998) - 126383, the entire contents of which are incorporated herein by reference.

### (Second Embodiment)

In the case of ranking processing, delay in processing by a buffering window width (for example, one slot), which is for received symbols for the ranking, + time necessary for ranking processing is required before starting of generation of replica signals, as replica signals for each symbol may be generated only after the ranking processing.

There will be described in the present embodiment a case where replica signals are generated just after class decision processing of symbols after likelihood calculation and, then, suitable decision of the received signals are performed.

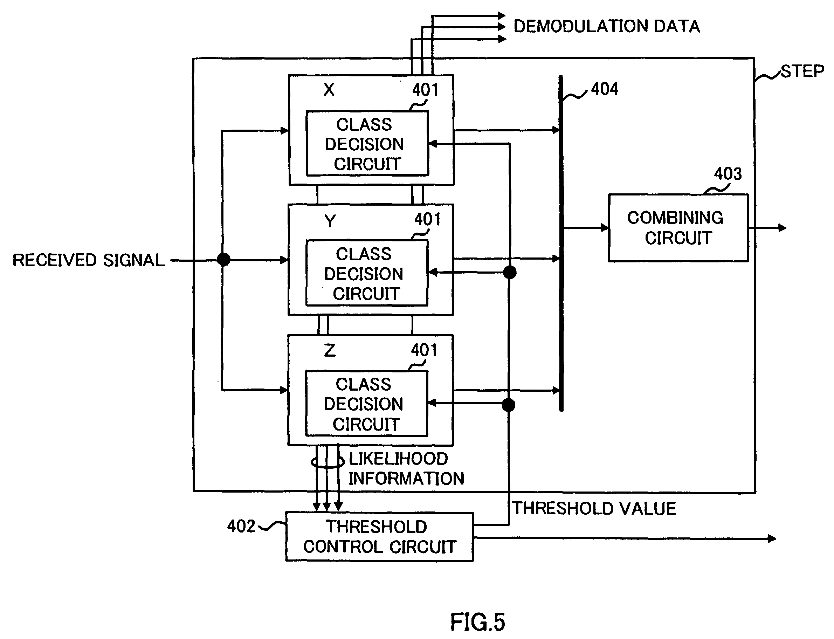

FIG. 5 is a block diagram showing an internal configuration of an interference canceller in a piece of radio base station apparatus according to a second embodiment of the present invention. A step comprises:
a plurality of circuit boards X through Z (three boards, here) which are subsets for processing of signals for a plurality of channels; a bus 404 conveying replica signals output from each circuit board X through Z; and a combining circuit 403 for combining of each replica signals. A class decision circuit 401 is provided in each circuit board X through Z. The class decision performed in the class decision circuit 401 means that threshold decision of calculated likelihoods is performed, using a specific likelihood value as a threshold value.

Therefore, each subset, independently from each other, may perform processing in subsets, that is, each processing such as despreading, RAKE combining, temporary decision, likelihood calculation, ranking, and replica generation by allocating all channels to a plurality of subsets. Accordingly, the delay in processing may be reduced, and, at the same time, the hardware size may be made smaller.

Here, threshold values are controlled in a threshold control circuit 402, based on information on the current slot or information on slots just before the current slot in the class decision, when a buffering window width for received symbols as ranking objects is configured to be, for example, a slot unit.

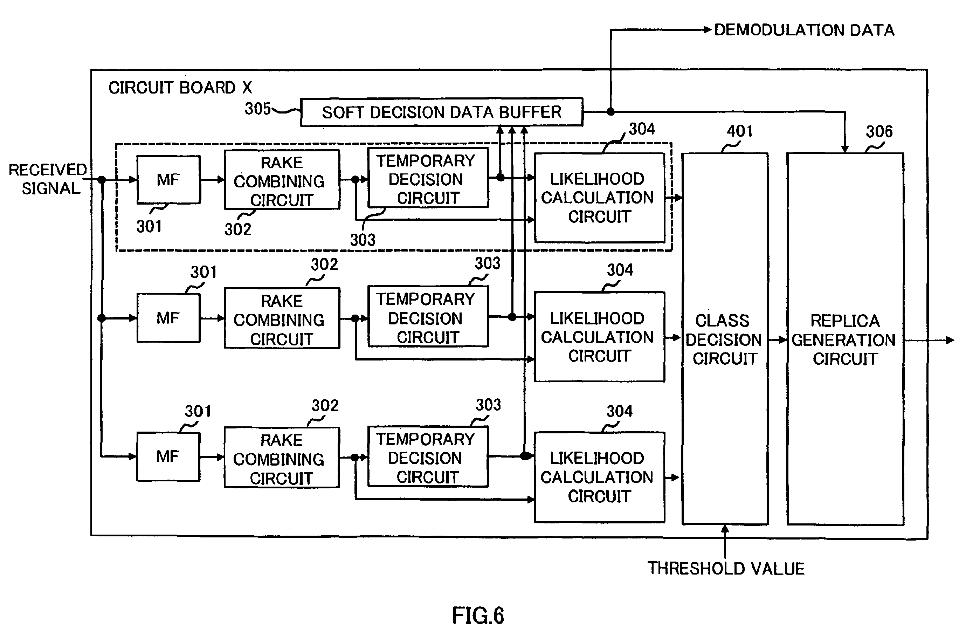

FIG. 6 is a block diagram showing a part of the interference canceller in the radio base station apparatus according to the second embodiment, and shows an internal configuration of each subset (circuit board). Though FIG. 6 shows the configuration of the circuit board X, the circuit boards Y and Z have the same configuration as that shown in FIG. 6.

The above circuit board X comprises for each channel (shown in a part enclosed with a dotted line in FIG. 6); a matched filter 301 for despreading processing of the received signals, using a predetermined spreading code (a spreading code used for spreading modulation processing at the side of the communication terminal apparatus); a RAKE combining circuit 302 for RAKE combining, using despreading signals obtained in the despreading processing; a temporary decision circuit 303 for symbol decision of signals after the above RAKE combining; and a likelihood calculation circuit 304 for calculation of likelihoods for symbols.

And, the circuit board X comprises: a soft decision data buffer 305 for storage of symbols after temporary decision for each channel; a class decision circuit 401 for class decision processing of symbols after likelihood calculation for each channel by the threshold decision; and a replica generation circuit 306 for generation of replicas (basically, independent of the order, but usually, in decided order) for symbols which are decided as classes having the likelihood above the threshold.

Operations of the radio station apparatus provided with the interference canceller having the above configuration will be described. Though the description will be made for the circuit board X, the circuit boards Y, and Z have the similar operations as those of the above board X.

As shown in FIG. 6, received signals are input to the matched filter 301, and supplied for despreading processing using a spreading code. Thereby, despreading signals are obtained for each channel. The above despreading signals are output to the temporary decision circuit 303 after RAKE combining in the RAKE combining circuit 302. Then, data after temporary decision (soft decision) in the temporary decision circuit 303 are stored in the soft decision data buffer 305, and, at the same time, output to the likelihood calculation circuit 304. In the likelihood calculation circuit 304, likelihood calculation of each symbol is performed. Here, any parameter indicating the received quality may be used as a parameter for the likelihood without any special limitation.

Here, each channel, independently from each other, performs despreading processing, RAKE combining processing, temporary decision, and likelihood calculation, which have been hitherto described.

All symbols for each channel after likelihood calculation are input to the class decision circuit 401. In class decision circuit 401, all replica signals, which have the obtained likelihoods above a threshold in comparison between the specific likelihood value and the above likelihoods obtained in the likelihood calculation for each symbol, are generated in the replica generation circuit 306 just after the above comparison. The symbols for which the replica signals are generated are output from the soft decision data buffer 305 as demodulation data.

The replica signals generated in the replica generation circuit 306 are sent to the combination circuit 403 through the bus 404, as shown in FIG. 5. In the combining circuit 403, the replica signals are input from each circuit board X through Z for combining of replica signals. The replica signals after combining in the combining circuit 403 are replica signals which are outputs of STEP 1 shown in FIG. 7, and the above replica signals are canceled from the received signals delayed in the delay circuit 604.

At this time, thresholds are controlled in the threshold control circuit 402, based on likelihood information (for example, likelihood distribution) from each circuit board X through Z which is a subset. Thereby, the best classification may be realized according to circumstances.

At this time, thresholds are controlled in the threshold control circuit 402 shown in FIG. 5, based on information (likelihood information) on the current slot or information on slots just before the current slot, when a buffering window width for received symbols as classification objects is configured to be, for example, one slot as a unit. In such a case, the reliability of the threshold is improved, when the threshold is decided, based on information (for example, amplitude distribution for all symbols or several symbol samples for each channel) at the current slot. But, there is generated the delay in processing. On the other hand, operation delay before the threshold decision may be reduced by controlling the threshold value, based on the information on the slots just before the current slot.

Thus, processing at STEP 1 is terminated. Thereafter, interference canceling processing of the received signals is performed by processing at the subsequent STEPS as described above.

Thus, despreading processing is performed one time in the radio base station apparatus according to the present embodiment, as the demodulation data for all symbols of all users are output, in decreasing order of the likelihood, at each step in the interference canceller. And, times of another-ranking may be decreased and delay in processing may be reduced, as replica signals are generated together at each step, and the above replica signals are canceled from the received signals at the same time.

Moreover, the class decision circuit may be easily realized, and the size of the hardware may be reduced in the radio base station apparatus according to the present embodiment, as each subset, independently from each other, class decision processing in the interference canceller. Further, processing till the generation of replica signals may be promptly performed, as each subset, independently from each other, performs class decision processing. Moreover, class decision processing, instead of ranking processing, is performed based on likelihood information for each symbol in the interference canceller according to the present embodiment. Thereby, the ranking operations and the channel allocation control may be eliminated, as the presence of generated replicas may be decided only by comparison between the obtained likelihoods and the specific likelihood (threshold value). As a result, the delay in processing may be remarkably reduced in the interference canceling processing.

The present invention is not limited to the above embodiments, and various kinds of modifications may be executed. Though, for example, a case where the number of subsets (circuit boards) is three, and the number of steps is three has been described in the above first and second embodiments, there is no limitation on the number of subsets and the that of steps in the present invention. And, there is also no special limitation on the number of channels processed in each subset.

The radio base station apparatus according to the present invention has a configuration provided with an interference canceller which comprises a plurality of sets of a processing unit including: a despreading section in which despreading signals for each channel are obtained by despreading, with a spreading code, of signals of a plurality of channels, spreading modulation of which is performed with a spreading code at the side of the communication terminal; a likelihood calculation section for calculation of the likelihoods of symbols, which are obtained by use of the above despreading signals, for each channel; a ranking section for ranking according to the likelihoods of each symbol; and a replica signal generation section for generation of replica signals according to the above ranking results, and a subtraction section for cancellation of replica signals generated in the above processing unit from the input signals into the above processing unit, wherein replica signals for a plurality of symbols are generated and canceled from the input signals at the same time by the above processing unit and the above subtraction section.

According to the above configuration, despreading processing is performed one time, as the demodulation data for all symbols of all users in decreasing order of the likelihood is output at each processing unit. The above point is the difference between the present canceller and the multi-stage type interference canceller by which the despreading processing is performed at each stage. And, times of another-ranking may be decreased and delay in processing may be reduced, as replica signals are generated together at each processing unit, and the above replica signals are canceled from the received signals at the same time.

The radio base station apparatus according to the present invention has a configuration where the apparatus comprises an interference canceller which is provided with a plurality of subsets including: a despreading section in which despreading signals for each channel are obtained by despreading, with a spreading code, of signals of a plurality of channels, spreading modulation of which is performed with the above spreading code at the side of the communication terminal; a likelihood calculation section for calculation of the likelihoods for symbols, which are obtained by use of the above despreading signals, for each channel; a ranking section for ranking according to the likelihoods of each symbol; and a replica signal generation section for generation of replica signals according to the above ranking results,
wherein each subset, independently from each other, performs the above ranking processing and the above generation of replica signals.

According to the above configuration, the ranking circuit may be easily realized, and the size of the hardware may be reduced, as each subset, independently from each other, performs ranking processing and generation of replica signals in the interference canceller. Further, processing till the generation of replica signals may be promptly performed, as each subset, independently from each other, performs ranking processing and generation of replica signals.

The radio base station apparatus according to the present invention has a configuration where the above apparatus comprises in the above configuration: a channel allocation control circuit for control of allocation of channels based on information reported from each subset so that the relations between the ranking order and likelihood are almost uniform among subsets.

According to the above configuration, reduction in the advantages of the interference cancellation by simultaneous ranking processing may be prevented, as the relations between the ranking order and likelihood are almost uniform among subsets.

The radio base station apparatus according to the present invention has a configuration where the apparatus comprises an interference canceller which is provided with a plurality of subsets including: a despreading section in which despreading signals for each channel are obtained by despreading, with a spreading code, of signals of a plurality of channels, spreading modulation of which is performed with the above spreading code at the side of the communication terminal; a likelihood calculation section for calculation of the likelihoods for symbols, which are obtained by use of the above despreading signals, for each channel; a class decision section for decision of the presence of replica signals by comparison between the likelihoods of each symbol and a threshold value; a replica signal generation section for generation of replica signals according to the above class decision results, wherein each subset, independently from each other, performs the above class decision processing and the above generation of replica signals.

According to the above configuration, the class decision circuit may be easily realized, and the size of the hardware may be reduced, as each subset, independently from each other, performs class decision processing and generation of replica signals in the interference canceller. Further, processing till the generation of replica signals may be promptly performed, as each subset, independently from each other, performs class decision processing. Moreover, class decision processing, instead of ranking processing, is performed based on likelihood information for each symbol in the interference canceller according to the present embodiment. Thereby, the ranking operations and the channel allocation control may be eliminated, as the presence of generated replicas may be decided only by comparison between the obtained likelihoods and the specific likelihood (threshold value). As a result, the delay in processing may be remarkably reduced in the interference canceling processing.

The radio base station apparatus according to the present invention has a configuration where the above apparatus comprises in the above configuration: a threshold control section for control of thresholds based on information on the current slot or information on slots just before the current slot.

According to the above configuration, the best classification may be realized according to circumstances in the interference canceling processing.

The communication terminal apparatus according to the present invention is characterized in that the above apparatus performs radio communication with the radio base station apparatus with the above configuration.

In a radio communication method according to the present invention, processing comprising: a despreading step in which despreading signals for each channel are obtained by despreading, with a spreading code, of signals of a plurality of channels, spreading modulation of which is performed with the above spreading code at the side of the communication terminal; a likelihood calculation step for calculation of the likelihoods of symbols, which are obtained by use of the above despreading signals, for each channel; a ranking step for ranking according to the likelihoods of each symbol; and a replica signal generation step for generation of replica signals according to the above ranking results, is performed every subset to which a plurality of channels are allotted,
wherein each subset, independently from each other, performs the above ranking processing and the above generation of replica signals.

According to the above method, the ranking circuit may be easily realized, and the size of the hardware may bereduced, as each subset, independently from each other, performs ranking processing and generation of replica signals in the interference canceller. Further, processing till the generation of replica signals may be promptly performed, as each subset, independently from each other, performs ranking processing and generation of replica signals.

In a radio communication method according to the present invention, processing comprising: a despreading step in which despreading signals for each channel are obtained by despreading, with a spreading code, of signals of a plurality of channels, spreading modulation of which is performed with the above spreading code at the side of the communication terminal; a likelihood calculation step for calculation of the likelihoods of symbols, which are obtained by use of the above despreading signals, for each channel; a class decision step for decision of the presence of generated replica signals by comparison between the likelihoods of each symbol and a threshold value; and a replica signal generation step for generation of replica signals according to the above class decision results, is performed every subset to which a plurality of channels are allotted, wherein each subset, independently from each other, performs the above class decision processing and the above generation of replica signals.

According to the above method, the class decision circuit may be easily realized, and the size of the hardware may be reduced, as each subset, independently from each other, performs class decision processing and generation of replica signals in the interference canceller. Further, processing till the generation of replica signals may be promptly performed, as each subset, independently from each other, performs class decision processing and generation of replica signals. Moreover, class decision processing, instead of ranking processing, is performed based on likelihood information for each symbol in the interference canceller according to the present embodiment. Thereby, the ranking operations and the channel allocation control may be eliminated, as the presence of generated replicas may be decided only by comparison between the obtained likelihoods and the specific likelihood (threshold value). As a result, the delay in processing may be remarkably reduced in the interference canceling processing.

As described above, it is possible according to the present invention to simplify a ranking circuit, and reduce the size of the hardware in a single-stage type multiuser interference canceller for improvement in the receiving characteristics of a piece of radio base station apparatus in the DS-CDMA system by simultaneous execution of ranking processing or class decision processing by a plurality of subsets.

The present description is based on Japanese published application No. 2000-014589, filed on Jan. 24, 2000, the entire contents of which are incorporated herein by reference.

### Industrial Applicability

The present invention may be applied to a piece of radio station apparatus and radio communication method used in a digital radio communication system.

## Claims

1. A piece of radio base station apparatus, comprising
an interference canceller which has a plurality of sets of a processing unit including:
despreading means in which despreading signals for each channel are obtained by despreading, with a spreading code, of signals of a plurality of channels, spreading modulation of which is performed with said spreading code at the side of a communication terminal;
likelihood calculation means for calculation of the likelihoods of symbols, which are obtained by use of said despreading signals, for each channel;
ranking means for ranking according to the likelihoods of each symbol; and
replica signal generation means for generation of replica signals according to said ranking results, and
subtraction means for cancellation of replica signals generated in said processing unit from input signals into said processing unit, wherein
replica signals for a plurality of symbols are generated and canceled from the input signals at the same time by said processing unit and said subtraction section.

2. A piece of radio base station apparatus, comprising an interference canceller which is provided with a plurality of subsets including:
despreading means in which despreading signals for each channel are obtained by despreading, with a spreading code, of signals of a plurality of channels, spreading modulation of which is performed with said spreading code at the side of a communication terminal;
likelihood calculation means for calculation of the likelihoods for symbols, which are obtained by use of said despreading signals, for each channel;
ranking means for ranking according to the likelihoods of each symbol; and
replica signal generation means for generation of replica signals according to said ranking results, wherein
each subset, independently from each other, performs said ranking processing and said generation of replica signals.

3. A piece of radio base station apparatus according to claim 2, comprising
channel allocation control means for control of allocation of channels based on information reported from each subset so that the relations between the ranking order and likelihood are almost uniform among subsets.

4. A piece of radio base station apparatus, comprising:
an interference canceller which is provided with a plurality of subsets including:
despreading means in which despreading signals for each channel are obtained by despreading, with a spreading code, of signals of a plurality of channels, spreading modulation of which is performed with said spreading code at the side of a communication terminal;
likelihood calculation means for calculation of the likelihoods for symbols, which are obtained by use of said despreading signals, for each channel;
class decision means for decision of the presence of replica signals by comparison between the likelihoods of each symbol and a threshold value;
replica signal generation means for generation of replica signals according to said class decision results,
wherein each subset, independently from each other, performs said class decision processing and said generation of replica signals.

5. A piece of radio base station apparatus according to claim 4, comprising:
threshold control means for control of threshold values based on information on the current slot or information on slots just before the current slot.

6. A piece of communication terminal apparatus performing radio communication with a piece of radio base station apparatus, wherein said radio base station apparatus comprises
an interference canceller which has a plurality of sets of
a processing unit including:
despreading means in which despreading signals for each channel are obtained by despreading, with a spreading code, of signals of a plurality of channels, spreading modulation of which is performed with said spreading code at the side of a communication terminal;
likelihood calculation means for calculation of the likelihoods of symbols, which are obtained by use of said despreading signals, for each channel;
ranking means for ranking according to the likelihoods of each symbol; and
replica signal generation means for generation of replica signals according to said ranking results, and
subtraction means for cancellation of replica signals generated in said processing unit from input signals into said processing unit, and
replica signals for a plurality of symbols are generated and canceled from the input signals at the same time by said processing unit and said subtraction section.

7. A radio communication method comprising the steps of:
despreading signals for each channel are obtained by despreading, with a spreading code, of signals of a plurality of channels, spreading modulation of which is performed with said spreading code at the side of the communication terminal;
calculating the likelihoods of symbols, which are obtained by use of said despreading signals, for each channel;
ranking according to the likelihoods of each symbol; and
generating replica signals according to said ranking results, is performed every subset to which a plurality of channels are allotted, wherein
each subset, independently from each other, performs said ranking processing and said generation of replica signals.

8. A radio communication method comprising the steps of:
despreading signals for each channel are obtained by despreading, with a spreading code, of signals of a plurality of channels, spreading modulation of which is performed with said spreading code at the side of a communication terminal;
calculating the likelihoods of symbols, which are obtained by use of said despreading signals, for each channel;
decising the presence of generated replica signals by comparison between the likelihoods of each symbol and a threshold value; and
generating replica signals according to said class decision results, is performed every subset to which a plurality of channels are allotted, wherein
each subset, independently from each other, performs said class decision processing and said generation of replica signals.
